# FASCICULE DE BREVET EUROPEEN

(11) **EP 3 651 089 B1**
(45) Date de publication et mention de la délivrance du brevet: **18.08.2021**
(21) Numéro de dépôt: 19205012.8
(22) Date de dépôt: 24.10.2019
(51) Int. Cl.: G06Q 10/06, G06Q 50/06, H02J 3/14, H02J 3/00, H02J 13/00

(54) **PROCÉDÉ D'AGRÉGATION DE FLEXIBILITÉS, PROGRAMME D'ORDINATEUR, SUPPORT D'ENREGISTREMENT ET SYSTÈME INFORMATIQUE CORRESPONDANTS**
VERFAHREN ZUR AGGREGATION VON FLEXIBILITÄTEN, ENTSPRECHENDE SOFTWARE, ENTSPRECHENDER DATENTRÄGER ZUR DATENSPEICHERUNG UND ENTSPRECHENDES IT-SYSTEM
METHOD FOR AGGREGATION OF FLEXIBILITIES, CORRESPONDING COMPUTER PROGRAM, RECORDING MEDIUM AND COMPUTER SYSTEM

(30) Priorité: 06.11.2018 FR 1860185
(43) Date de publication de la demande: 13.05.2020
(73) Titulaire: Electricité de France, 75008 Paris (FR)
(72) Inventeur: CHAZOTTES, Benoit, 91190 GIF S/YVETTE (FR); CHAUSSUMIER, Pascal, 92128 MEUDON (FR); CHARPENTIER, Philippe, 78830 BULLION (FR)
(74) Mandataire: Regimbeau

(56) Documents cités:
- MACDOUGALL PAMELA ET AL: "Applying machine learning techniques for forecasting flexibility of virtual power plants", 2016 IEEE ELECTRICAL POWER AND ENERGY CONFERENCE (EPEC), IEEE, 12 octobre 2016 (2016-10-12), pages 1-6, XP033017555, DOI: 10.1109/EPEC.2016.7771738
- PAMELA MACDOUGALL ET AL: "Predictive control for multi-market trade of aggregated demand response using a black box approach", 2016 IEEE PES INNOVATIVE SMART GRID TECHNOLOGIES CONFERENCE EUROPE (ISGT-EUROPE), 1 octobre 2016 (2016-10-01), pages 1-6, XP055587017, DOI: 10.1109/ISGTEurope.2016.7856308 ISBN: 978-1-5090-3358-4

## Description

### DOMAINE DE L'INVENTION

La présente invention se situe dans le domaine de la gestion d'un réseau électrique.

Elle a trait plus particulièrement mais non exclusivement à un procédé d'agrégation de flexibilités de consommation ou de production d'énergie électrique.

### CONTEXTE DE L'INVENTION

Pour optimiser la gestion d'un réseau électrique, les gestionnaires de ce réseau doivent chercher à équilibrer la consommation et la production d'énergie raccordée au réseau.

La flexibilité de la demande, c'est-à-dire la capacité des bâtiments consommateurs d'énergie à moduler la puissance soutirée au réseau, est un moyen économique de rééquilibrer la production et la consommation à différentes échelles (telles qu'un quartier, une ville, une région ou un pays).

Le rééquilibrage production/consommation peut nécessiter la contribution d'un ensemble de sites apportant chacun une partie du besoin de flexibilité global.

L'agrégation, c'est-à-dire l'activation et le cumul des flexibilités de différents sites est réalisée par des acteurs appelés "agrégateurs", qui répondent favorablement aux demandes des gestionnaires de réseaux.

Le développement d'une production d'énergie renouvelable (en abrégé "EnR"), intermittente et décentralisée, amplifie le besoin de telles flexibilités.

En effet, les productions énergétiques éolienne et solaire étant raccordées sur les réseaux de tension "HTA" (Haute Tension A) et "BT" (Basse Tension), l'équilibre production/consommation et par conséquent l'agrégation de flexibilités, doivent se faire sur des zones beaucoup plus localisées et donc très nombreuses (typiquement à l'échelle de chaque poste de distribution, c'est-à-dire pour chaque quartier d'habitation ou zone d'activité).

### ARRIERE PLAN TECHNOLOGIQUE DE L'INVENTION

### AJUSTEMENT DE LA PRODUCTION

En termes de demande en énergie, le gestionnaire de réseau prévoit à l'avance un déséquilibre entre consommation et production. Toutes les heures, voire toutes les minutes ou en temps réel, et en réponse à cette demande, des consignes sont envoyées aux centrales de production afin qu'elles produisent plus ou moins, en fonction de la consommation prévue (qui représente la contrainte). Une erreur de prévision est parfois à corriger au moyen de l'ajustement des programmes de production.

Cette méthode existe sur grands réseaux, à l'échelle nationale, avec des consignes envoyées aux grosses unités de production pilotables (centrales thermiques et hydrauliques).

### AJUSTEMENT DE LA CONSOMMATION

Il existe un autre mécanisme pour garantir l'équilibre du réseau qui consiste en un ajustement, ouvert à des modulations de la consommation, pour des consommateurs qui ont des flexibilités. En effet, ces consommateurs s'engagent à réduire leur consommation contre rémunération.

En pratique, plusieurs agrégateurs concurrents proposent des offres différentes et font des propositions pour le lendemain ou au cours de la journée. Les clients passent des contrats avec les agrégateurs de leur choix pour proposer leur flexibilité, laquelle est rémunérée.

Chaque agrégateur fait appel à des petites flexibilités portées par un grand nombre de clients. Il agrège (en d'autres termes il cumule) les flexibilités de son portefeuille de clients pour faire une offre globale au gestionnaire de réseau. Ce dernier peut alors faire son choix parmi une pluralité d'offres qui lui sont envoyées par divers agrégateurs, en fonction de leurs caractéristiques et de leur prix.

L'agrégateur construit des modèles de prévision de flexibilité en fonction de la météorologie prévue, des prévisions de consommation des clients, pour pouvoir prévoir des flexibilités la veille pour le lendemain. Exprimé autrement, les calculs de prévision de flexibilité sont à chaque fois réalisés à la demande, juste avant de construire une offre pour le gestionnaire du réseau.

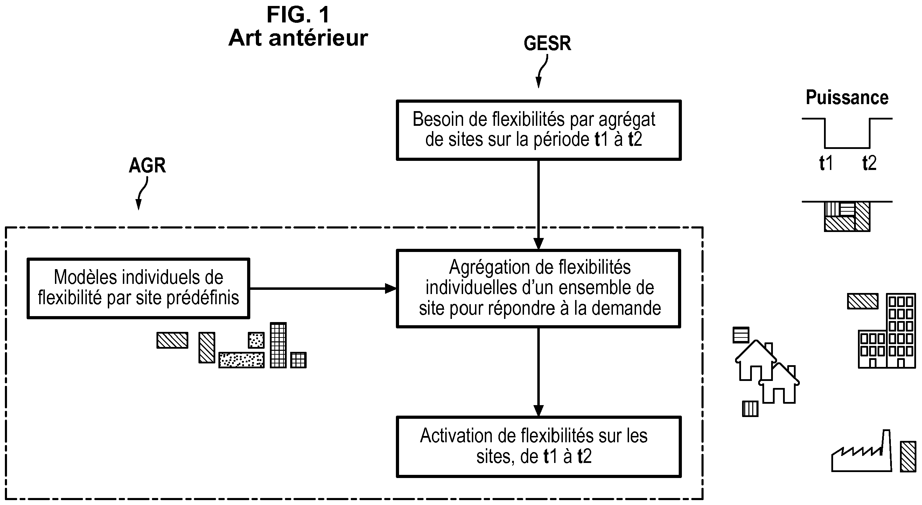

Ces modèles de prévision fonctionnent de façon déterministe, ainsi que le montre la figure 1 annexée.

Des algorithmes permettent, en fonction de variables telles que la température extérieure, de prévoir en sortie une réponse à une demande de flexibilité formulée par le gestionnaire de réseau GESR.

Les modèles de prévision déterministes fonctionnent bien lorsque les charges consommatrices (c'est à dire les appareils consommateurs en énergie) sont pilotables, car la réponse est quantifiable et sûre.

Mais ces modèles déterministes fonctionnent mal pour des charges qui seront pilotées manuellement par l'utilisateur. En effet, on peut difficilement prédire de façon sure quelle sera la réponse de l'utilisateur, à savoir s'il baissera réellement ou non sa consommation à la demande de l'agrégateur AGR.

Ainsi des procédés sont utilisés aujourd'hui par les agrégateurs pour fournir d'une part des flexibilités aux gestionnaires des réseaux de transport d'énergie et, d'autre part, optimiser l'équilibre offre-demande au niveau national.

Mais les calculs de prévision de flexibilité sont à chaque fois réalisés à la demande, juste avant de construire une offre pour le gestionnaire de réseau GESR.

Les plateformes informatiques d'agrégation actuelles, quelquefois appelées « centrales de production virtuelles » (ou sous l'acronyme "VPP" pour "Virtual Power Plants") remplissent les fonctions détaillées ci-dessous.

Elles agrègent un grand nombre de sites flexibles et bénéficient d'une réponse statistiquement plus fiable (foisonnement des erreurs). Il s'agit d'un cas plus simple que celui des réseaux de distribution nécessitant des flexibilités locales issues de multiples petits agrégats.

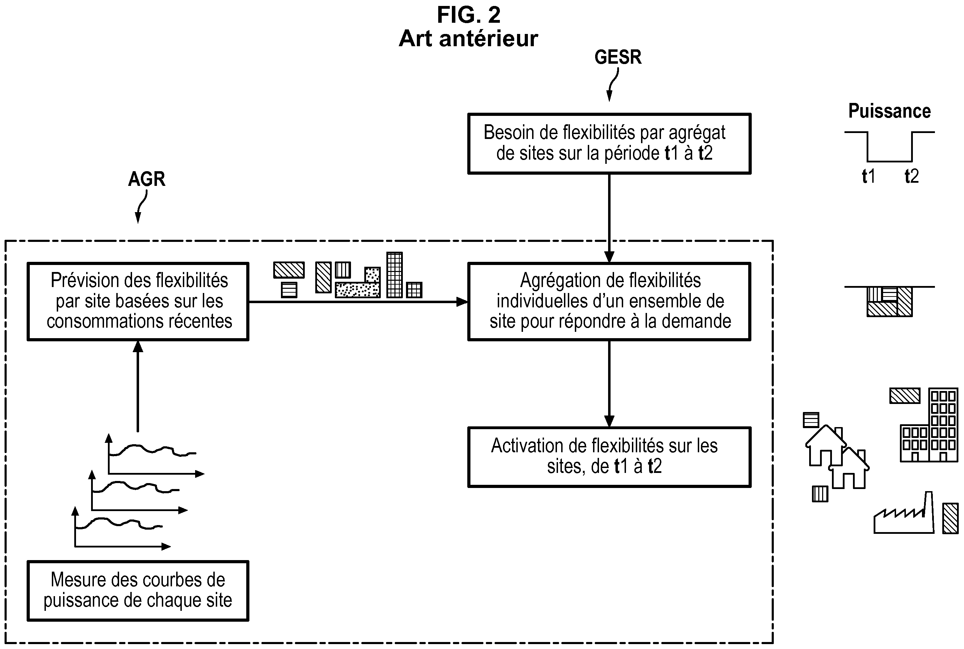

Elles réalisent généralement des prévisions de flexibilités avant chaque activation. Des prévisions statistiques des flexibilités basées sur les consommations récentes, tel que montré à la figure 2 annexée, sont utilisées pour de gros agrégats. Mais elles sont coûteuses en ressources informatiques et donc peu adaptées à la réalisation d'un grand nombre de calculs pour de petits agrégats.

Ces procédés sont par ailleurs sensibles à la qualité des données récentes, sur lesquelles se basent les prévisions de flexibilités.

Elles exploitent dans certains cas des modèles déterministes de flexibilités (comme expliqué plus haut en référence à la figure 1) bien adaptés au télé-pilotage direct de la puissance des sites ou à l'estimation des flexibilités sur des intervalles de temps précis (par exemple ciblant la pointe de consommation en hiver dans le créneau horaire 18h-20h).

Un tel télé-pilotage s'oppose aux flexibilités non pilotées (équipements gérés manuellement par les habitants ou les exploitants des entreprises à la réception des signaux de l'agrégateur).

Les flexibilités gérées manuellement sont moins coûteuses à produire mais plus complexes à modéliser sur des périodes d'activation très diversifiées (recours à des modèles statistiques auto-adaptatifs).

En synthèse, les modèles déterministes sont faciles à mettre en oeuvre pour des équipements pilotés par un automatisme. En revanche, une demande de modulation manuelle de la consommation peut conduire à différentes réactions du client notamment en fonction de sa disponibilité et de ses contraintes. En conséquence, la modélisation du comportement humain est incertaine.

Un état de la technique supplémentaire en la matière est constitué par les documents suivants :
EP 2899674 est relatif à un procédé de prévision de la rentabilité d'un événement de réponse à la demande. La méthode comprend la détermination de l'incertitude de la flexibilité de la demande pour plusieurs sites sur la base de données historiques relatives aux flexibilités de la demande des sites. Le procédé consiste également à regrouper la pluralité de sites en un ou plusieurs groupes en fonction de l'incertitude de flexibilité de la demande.
EP 2894748 se rapporte à une méthode de réponse à la demande (RD) en flexibilité qui est basée sur une analyse des contrats de flexibilité.

Les articles :
MACDOUGALL PAMELA ET AL : « Applying machine learning techniques for forecasting flexibility of virtual power plants », 2016 IEEE ELECTRICAL POWER AND ENERGY CONFERENCE (EPEC), IEEE, octobre 2016, pages 1-6, XP033017555, DOI: 10.1109/EPEC.2016.7771738, [extrait le 2016-12-05], et
PAMELA MACDOUGALL ET AL: "Prédictive control for multi-market trade of aggregated demand response using a black box approach",2016 IEEE PES INNOVATIVE SMART GRID TECHNOLOGIES CONFERENCE EUROPE (ISGT-EUROPE), octobre 2016, pages 1-6, XP055587017, DOI: 10.1109/ISGTEurope.2016.7856308, ISBN: 978-1-5090-3358-4.
sont relatifs à la validité de demandes de flexibilité en faisant usage de méthodes d'apprentissage (« machine learning »).

### SYNTHESE ET PROBLEME TECHNIQUE A RESOUDRE

Les gestionnaires de réseaux demandent aux agrégateurs de flexibilités des modulations de consommation et/ou de production de sites raccordés au réseau, afin d'équilibrer la consommation et la production et, ainsi réduire les contraintes de certaines parties du réseau.

Les problèmes particuliers de l'agrégation de flexibilités au niveau d'un poste de distribution sont multiples et liés aux spécificités du réseau de distribution. Ils sont détaillés ci-après.

Les productions en énergie sont "éparpillées" (par exemple les panneaux solaires sur de multiples toits). Ainsi, les contraintes sont plus localisées et nécessitent des agrégats de flexibilités très nombreux (typiquement rattachés à chaque poste de distribution).

Dans ces conditions, les estimations des flexibilités disponibles doivent donc être mises en œuvre très rapidement.

Les productions d'énergie sont intermittentes (énergies solaire et éolienne qui sont liées aux aléas météorologiques), de sorte que les durées et horaires des contraintes sont très diversifiées (par opposition aux régularités des contraintes saisonnières observées sur les réseaux de niveaux de tensions supérieurs, où les déséquilibres sont essentiellement liés aux rythmes des consommations d'énergie (par exemple chauffage, climatisation, cuisson).

Dans ces conditions, pour le réseau de distribution, la flexibilité doit pouvoir être estimée sur toutes les périodes de temps possibles.

Les flexibilités activées manuellement au niveau des sites (par opposition aux flexibilités pilotées à distance, qui présentent un coût supérieur) sont difficiles à prévoir par des méthodes déterministes.

Dans ces conditions, il est difficile de prévoir une réponse fiable.

Les flexibilités étant agrégées sur de petites zones (par exemple une centaine de sites sont raccordés à un poste de distribution), les prévisions de flexibilités d'une activation particulière sur de petits agrégats, ne bénéficient pas du foisonnement des erreurs apportant une réponse statistiquement plus fiables constatées sur des agrégats plus grands.

Il apparait de ce qui précède que le but de l'invention est de proposer un procédé d'agrégation de flexibilités qui permet d'activer des flexibilités de manière rapide, quels que soient le type d'énergie électrique (hydraulique, solaire ou autre) et la période de temps considérés, et ceci indépendamment de la taille des zones agrégées.

Un but secondaire est de proposer un procédé d'agrégation de flexibilités qui permet de s'affranchir, autant que possible, de la "variable humain", c'est à dire des charges qui sont pilotées manuellement par l'utilisateur.

### RESUME DE L'INVENTION

A cet effet, dans le cadre de la présente invention, il est proposé un procédé d'agrégation de flexibilités de consommation ou de production d'énergie électrique d'une pluralité de sites constituant ensemble un portefeuille clients, lequel est mis en oeuvre par des moyens informatiques et qui comporte les étapes suivantes :
a) envoi d'une demande de flexibilités de consommation ou de production par un gestionnaire d'un réseau électrique à un agrégateur ;
b) agrégation par ledit agrégateur des flexibilités individuelles des sites disponibles dans ledit portefeuille clients, ces flexibilités individuelles étant constituées d'autant de modèles individuels de flexibilité que de sites disponibles ;
c) activation desdites flexibilités disponibles,
caractérisé par le fait qu'il comporte en outre les étapes suivantes :
d) mesure des courbes réelles de puissance, c'est à dire de charge, respectivement de production desdits sites pendant l'activation de l'étape c) ;
e) calcul a posteriori, c'est à dire après la fin de l'activation de l'étape c), de la flexibilité réelle réalisée pour chacun desdits sites ;
f) à chaque réitération desdites étapes b) à e), adaptation desdits modèles individuels de flexibilité par apprentissage automatique.

Ainsi qu'on le verra plus loin à la lecture de la description détaillé, l'invention permet d'apporter une plus grande robustesse aux estimations des flexibilités disponibles pour une série d'activation de flexibilités à venir.

Par ailleurs, l'invention répond aux besoins locaux du réseau de distribution (typiquement au niveau d'un poste de distribution), tout en étant plus rapide et plus simple que les systèmes actuellement utilisés par les agrégateurs à l'échelle régionale ou nationale, afin de pouvoir traiter automatiquement un grand nombre d'agrégats et à des coûts raisonnables.

Selon d'autres caractéristiques non limitatives et avantageuses de l'invention, prises individuellement ou selon l'une quelconque de leurs combinaisons possibles :
- ledit calcul de l'étape e) est réalisé à partir de la comparaison entre la puissance de la période d'activation avec la puissance relevée pendant au moins une période sans activation ;
- l'adaptation des modèles par apprentissage automatique se fait par construction d'un modèle statistique à partir de l'enregistrement des profils de flexibilités réalisées successivement ;
- ledit apprentissage automatique est mis en oeuvre via au moins un algorithme déterminant la moyenne des flexibilités précédemment réalisées à l'étape e), un algorithme d'agrégation d'arbres (en anglais "boosting") ou un réseau de neurones récurent.

La présente invention se rapporte également à un programme d'ordinateur comportant des instructions adaptées pour l'exécution des étapes du procédé selon l'une des caractéristiques précédentes, lorsque ledit programme d'ordinateur est exécuté par au moins un processeur, ainsi qu'à un support d'enregistrement lisible sur un ordinateur sur lequel est enregistré un programme d'ordinateur comportant des instructions pour l'exécution des étapes du procédé selon l'une des caractéristiques ci-dessus.

Enfin la présente invention concerne également un système informatique d'agrégation de flexibilités de consommation ou de production d'énergie électrique d'une pluralité de sites constituant ensemble un portefeuille clients, pour la mise en œuvre du procédé selon l'une des caractéristiques précitées, caractérisé par le fait qu'il comporte un serveur informatique composé d'au moins un processeur, au moins une mémoire, ainsi qu'un ensemble d'interfaces, ces interfaces étant configurées pour communiquer avec :
- un serveur informatique rattaché audit gestionnaire de réseau électrique avec lequel elles échangent des demandes, respectivement de offres de flexibilité ;
- avec lesdits sites avec lesquels elles transmettent des ordres de flexibilités ;
- et/ou avec des compteurs ou autres dispositifs de mesure de la puissance desdits sites, qui leurs transmettent soit en continu les valeurs de puissance des sites, soit périodiquement les courbes de puissance enregistrées par ces compteurs et autre dispositifs de mesure.

Selon des caractéristiques particulièrement avantageuses de ce système :
- il comporte une mémoire qui contient une base de données des consommations relevées sur les sites, ainsi que leurs modèles constitués par apprentissage automatique ;
- il comporte également au moins un dispositif gestionnaire d'énergie ou un automatisme configurés pour assurer une gestion locale, c'est à dire au niveau d'un site, de la consommation ou de la production dudit site, et prendre en compte des ordres de modulations de puissance transmis à distance par ledit serveur informatique ;
- il comporte également au moins une passerelle domestique (également appelée « Box internet ») configurée pour acheminer des signaux de pilotage vers lesdits sites et collecter des mesures de puissance par ledit serveur informatique, au moins lorsqu'un moyen de communication distant (tel que les courants porteurs de ligne ou les ondes radio) ne le permet pas ;
- il comporte des moyens informatiques pour la mise en œuvre des étapes du procédé précité.

### BREVE DESCRIPTION DES DESSINS

D'autres objectifs, caractéristiques et avantages de l'invention apparaîtront à la lecture de la description qui suit. Cette description, donnée à titre illustratif et non limitatif est faite en référence aux dessins annexés dans lesquels :
- les figures 1 et 2 illustrent, comme déjà évoqué en introduction, des procédés d'agrégation de flexibilités selon à l'art antérieur ;

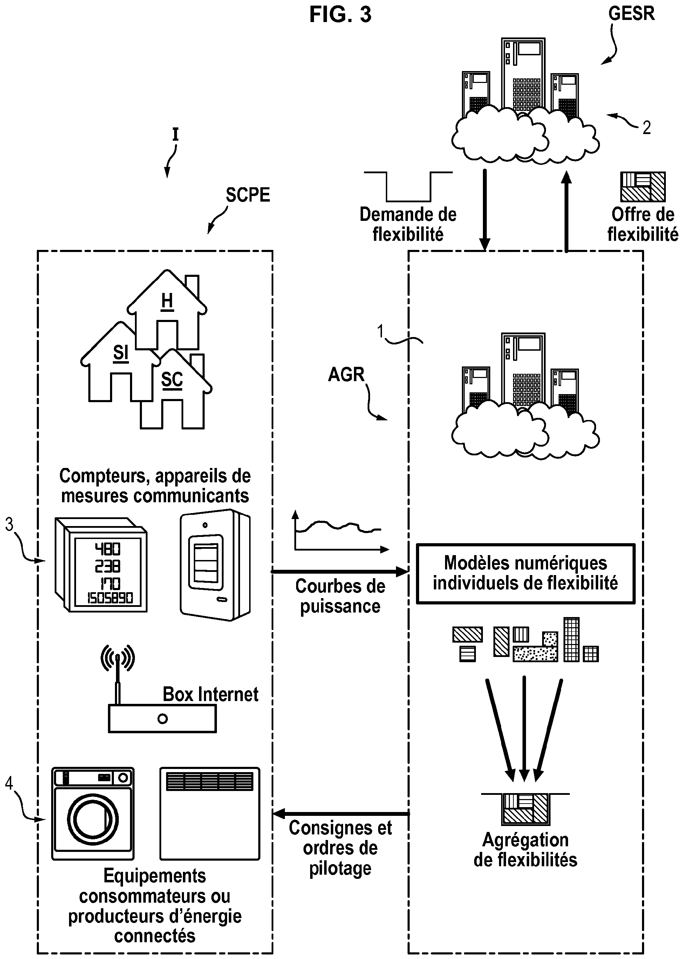

- la figure 3 illustre un système d'agrégation conforme à l'invention ;
- la figure 4 illustre un procédé d'agrégation conforme à l'invention ;
- la figure 5 est un schéma d'illustration du principe de calcul de la flexibilité réalisée sur un site ;
- la figure 6 est un schéma illustrant des types de flexibilité réalisés lors d'une activation ;
- enfin, la figure 7 illustre la modélisation de la flexibilité par apprentissage automatique de flexibilités successives.

### DESCRIPTION DETAILLEE DE L'INVENTION

Dans le cadre de la description qui suit, on se situe essentiellement dans le cadre d'une recherche d'équilibre de la production avec la consommation sur une partie du réseau électrique.

Comme évoqué plus haut, selon la présente invention, on cherche à équilibrer la consommation avec la production pour réduire les contraintes sur une partie du réseau considéré, au niveau local et plus précisément au niveau d'un poste de distribution, en agrégeant et en incitant les sites à moduler leur consommation pour apporter la flexibilité nécessaire au fonctionnement optimal du réseau de distribution. Ainsi, l'occupant d'un logement ou le gestionnaire d'un site tertiaire ou industriel reçoit de l'agrégateur AGR une demande (par exemple sous la forme d'un courriel, d'un minimessage (connu sous l'acronyme SMS) ou via un autre canal) de réduction de la puissance absorbée par son site raccordée à cette partie du réseau, sur un intervalle de temps défini (par exemple une demande d'effacement de consommation la veille pour le lendemain pour une plage horaire de la journée en cours).

Cette méthodologie peut être élargie à l'agrégation et au pilotage des flexibilités à hausse ou à la baisse de puissance sur des sites de consommation et/ou de production raccordés à cette partie du réseau, qui pourront être pilotés directement à distance via un automate (tel qu'une "énergie-box" ou un dispositif gestionnaire d'énergie...) configuré pour assurer une gestion locale (au niveau du site) de la consommation ou de la production d'un site et prendre en compte les ordres de modulation de la puissance transmis à distance par une plateforme informatique d'agrégation

La présente invention porte notamment sur un procédé permettant de prédire, d'agréger et d'activer plus rapidement les flexibilités disponibles sur un ensemble de sites pour répondre aux besoins de flexibilités d'un très grand nombre de réseaux locaux (par exemple au niveau de plusieurs centaines de milliers de postes de distribution).

On peut se reporter à la figure 1 qui illustre très schématiquement un système d'agrégation I configuré pour la mise en oeuvre du procédé précité.

Ce système est composé, dépendant de l'agrégateur du réseau électrique AGR, d'une plateforme 1 d'agrégation et de pilotage des flexibilités disponibles sur des sites résidentiels ou des entreprises.

Cette plateforme 1 est un serveur informatique sur lequel s'exécute le procédé selon l'invention. Ce serveur est composé d'au moins un processeur, d'au moins une mémoire et d'un ensemble d'interfaces de communication filaire ou sans fil (par exemple communiquant par des ondes radio).

Ces interfaces permettent au système de communiquer, en amont, avec le serveur informatique 2 du gestionnaire de réseau électrique GESR avec lequel il échange des demandes et des offres de flexibilités.

Elles permettent également de communiquer avec des sites consommateurs ou producteurs d'énergie SPCE (composés notamment d'habitations H, de sites industriels SI et/ou commerciaux SC) vers lesquels elles transmettent des ordres de flexibilités qui correspondent soit à des signaux de pilotage de la puissance consommée ou produite, soit à des demandes de modulations manuelles (c'est à dire par les occupants) des puissances des sites.

Elles permettent aussi de communiquer avec des compteurs 3 ou autres dispositifs de mesure de la puissance des sites SPCE qui lui transmettent en continu les valeurs des puissances de ces sites, ou périodiquement les courbes de puissance enregistrées par ces dispositifs.

Avantageusement, la mémoire du système 1 contient une base de données des consommations relevées sur les sites SPCE, ainsi que leurs modèles constitués par apprentissage automatique des flexibilités précédemment réalisées. Ces modèles servent à construire les offres de flexibilité transmises au gestionnaire de réseau GESR.

Enfin, le système comporte des charges électriques 4 (c'est à dire des appareils) ou des équipements de production dont la puissance peut être modulée sur un ensemble de sites afin de constituer la flexibilité que l'on cherche à agréger

Avantageusement, le système I comporte également au moins un dispositif gestionnaire d'énergie ou un automatisme configuré pour assurer une gestion locale, c'est à dire au niveau d'un site, de la consommation ou de la production dudit site, et prendre en compte des ordres de modulations de puissance transmis à distance par ledit serveur informatique.

Par ailleurs, le système I peut comporter au moins une passerelle domestique (communément appelée "Box internet") configurée pour acheminer des signaux de pilotage vers lesdits sites et collecter des mesures de puissance par ledit serveur informatique, au moins lorsqu'un moyen de communication distant (tel que les CPL (courants porteurs de ligne) et les ondes radio) ne le permet pas.

L'invention est plus particulièrement appropriée pour des incitations à la modulation manuelle de la consommation d'un site par ses occupants (le comportement humain est en effet difficile à prévoir et à modéliser de façon déterministe).

Elle s'applique aussi pour des systèmes pilotés à distance via des automatismes (par exemple par télé-réglage du thermostat d'un chauffage), bien que les effets d'un système contrôlé directement soient plus prévisibles et plus facilement modélisables de façon déterministe.

Par extension, elle donne de bons résultats sur la modulation de la puissance des moyens de production (à la hausse ou à la baisse).

Un agrégateur AGR répertorie tous ses sites consommateurs (ou producteurs). Il se limite, pour chaque site, à collecter et enregistrer la consommation globale du site qui lui parvient par exemple d'un compteur communicant.

L'agrégateur AGR cherche alors à construire par apprentissage un modèle de flexibilité par site. Ce modèle est une image de la réponse à la demande de flexibilité. Il est construit pour donner l'information sur la réponse à flexibilité pour toutes les durées, à tout moment de la journée, pour tous les jours de la semaine et de l'année.

Il est construit sous forme de blocs (ou de profils) de variation de puissance pendant une durée. Ce modèle de flexibilité par site représente le profil puissance/temps de la réponse du site aux demandes de baisse (ou de hausse) émises par l'agrégateur.

La fiabilité (régularité) de la réponse, dépend de chaque site, et peut être également intégrée comme un paramètre du modèle. Cette information permet à l'agrégateur de tenir compte de marges d'erreurs adaptées, en fonction de la précision de la flexibilité agrégée attendue par le gestionnaire de réseau.

Afin d'initier le modèle il est possible de prendre comme entrée de départ un modèle constitué pour un client type et connu. Il s'agit alors d'un modèle générique pour un type de foyer, de logement, ou un type de site d'entreprise dépendant de son secteur d'activité.

Puis, par apprentissages successifs de ses réponses, on constitue un modèle qui lui est spécifique. Cet enrichissement se fait *a posteriori,* après que la demande de flexibilité et l'offre aient été réalisées.

Dans l'état de l'art et comme déjà indiqué précédemment, le modèle s'élaborait à partir d'une prévision *a priori,* basé par exemple sur les caractéristiques du foyer, du bâtiment, ou des équipements d'un site d'entreprise, éventuellement corrigés par des données mesurées ou prévues telles que la température extérieure.

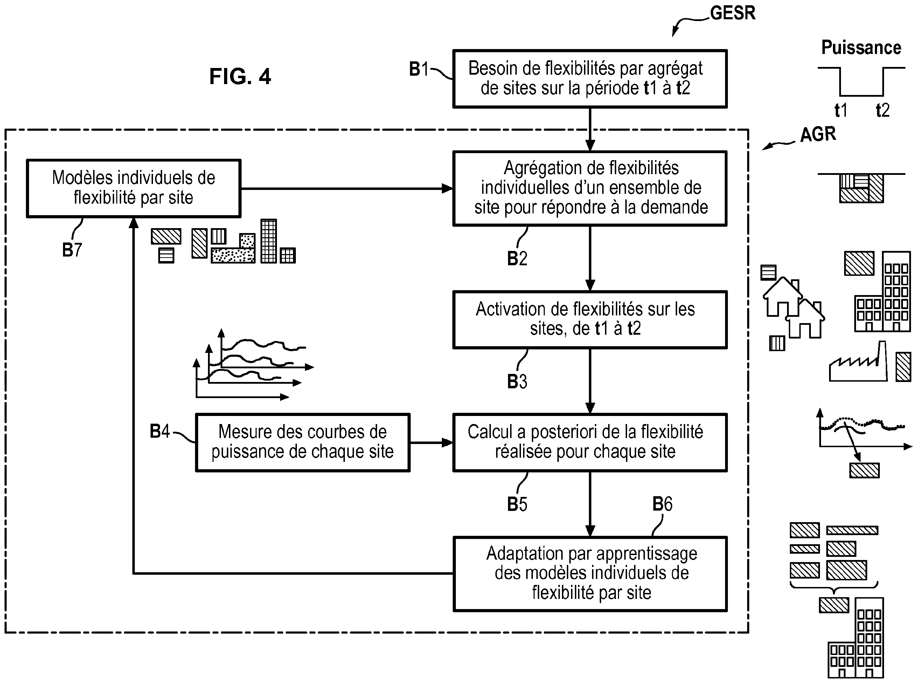

Tout particulièrement en référence à la figure 4 annexée, le procédé d'agrégation selon l'invention peut s'organiser selon les étapes suivantes :
a) Envoi d'une demande de flexibilité de consommation pour assurer l'équilibre offre-demande du réseau électrique (issue du gestionnaire de réseau GESR en direction d'un agrégateur AGR). Ceci correspond au bloc B1.
b) Agrégation (c'est-à-dire cumul en volume et en durée) des "blocs" de flexibilités disponibles du portefeuille clients (c'est à dire des flexibilités individuelles des sites disponibles dans le portefeuille de clients). Ceci correspond au bloc B2.
c) Activation des flexibilités des sites disponibles pour répondre au besoin de flexibilité (modulation de la puissance des sites par envoi d'ordre de baisse (ou de hausse) de puissance soutirée par les sites). L'occupant du site baisse manuellement sa consommation, suivant ses propres possibilités. Ceci correspond au bloc B3.
d) Mesure des courbes réelles de puissance, c'est à dire de charge, respectivement de production des sites pendant l'activation de l'étape c). Ceci correspond au bloc B4.
e) Calcul *a posteriori,* c'est à dire après la fin de l'activation de l'étape c) ou à un moment ultérieur, de la flexibilité réelle réalisée à partir de la puissance mesurée sur les sites (tout particulièrement par comparaison de la puissance de la période d'activation avec la puissance relevée les jours sans activation). Ceci correspond au bloc B5.
f) Adaptation du modèle de flexibilité par apprentissage automatique des flexibilités précédemment réalisées sur chaque site, au cours des différentes activations de flexibilités. Ceci correspond aux blocs B6 et B7.

Le modèle de flexibilité constitué pour chaque site permet à la plateforme 1 d'estimer à tout moment et instantanément la flexibilité disponible sur chaque site, pour tous les créneaux horaires où le gestionnaire de réseau est susceptible de faire une demande de flexibilité ou d'attendre une offre de flexibilité de l'agrégateur AGR.

La première phase de la modélisation consiste à estimer la variation de puissance du site lorsqu'il reçoit un ordre issu de la plateforme d'agrégation 1.

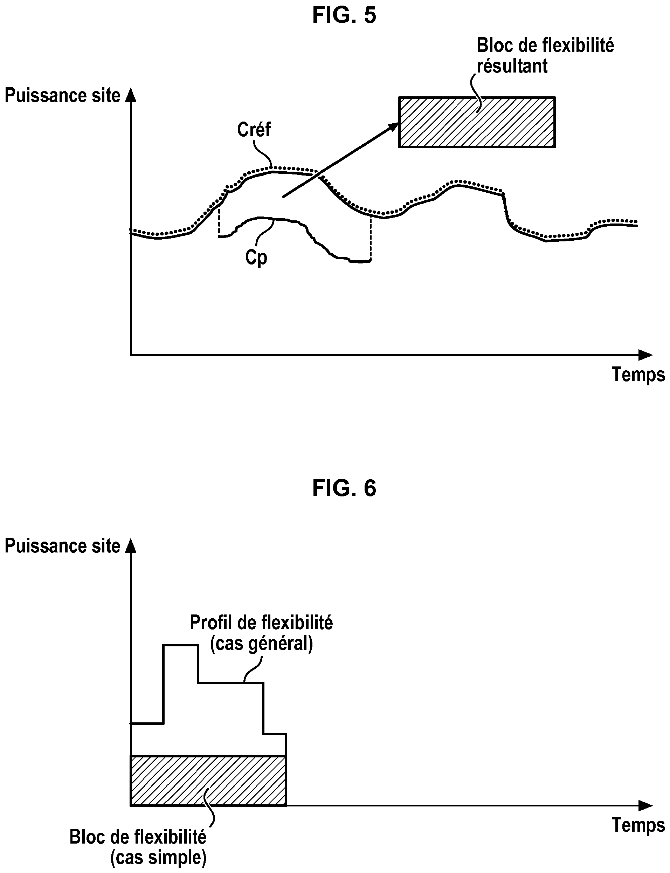

Ainsi, en référence à la figure 5, la flexibilité est estimée en comparant la courbe de puissance réalisée Cp lors d'une demande de flexibilité, à une courbe de référence Créf qui est basée sur une estimation la courbe de puissance appelée par le site sans demande de flexibilité, toutes choses égales par ailleurs (même température, même type de jour, etc.).

Cette courbe de référence peut être modélisée à partir de l'historique de données des jours sans demande de flexibilité par des méthodes de sciences des données (en anglais "datascience") telles que les régressions sous contrainte (et notamment celles connues sous les appellations "Lasso", "Ridge" ou "ElasticNet").

Comme le montre la figure 6, un cas simple correspondrait à une baisse (ou une hausse) constante de la puissance pendant la durée de l'ordre de flexibilité (illustration par le bloc rectangulaire), mais dans le cas général, la variation de puissance aura un profil spécifique au site et à la période de flexibilité considérée (illustration par le profil situé au-dessus du bloc rectangulaire).

Le profil de flexibilité (c'est à dire le "taux de réponse ") d'un site peut par exemple varier en fonction :
- de l'activité d'un site d'entreprise,
- de la présence des occupants d'une habitation,
- de la saison,
- du jour de la semaine,
- de heure et à la durée de la modulation de puissance.

Un modèle déterministe parait peu adapté à cette complexité.

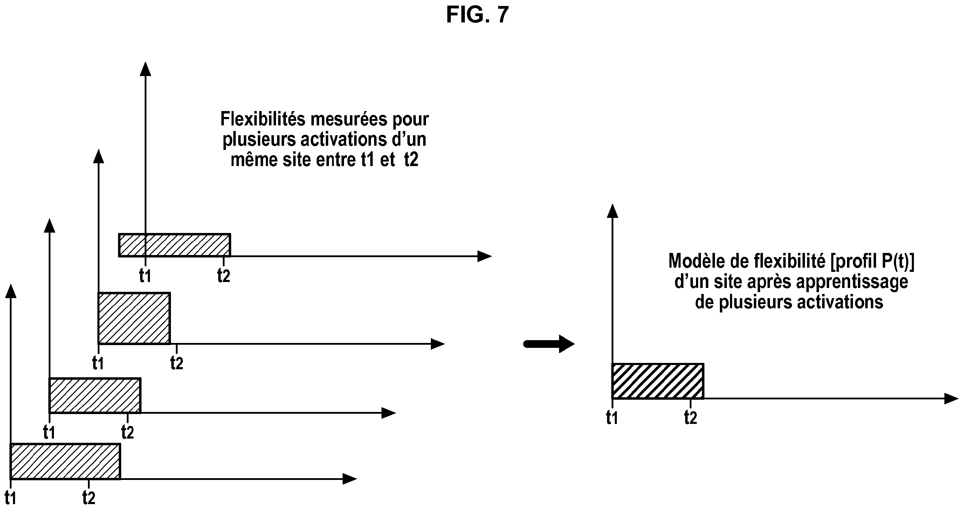

C'est la raison pour laquelle une seconde phase de la modélisation consiste donc à construire un modèle statistique à partir de l'enregistrement des profils des flexibilités réalisées successivement, comme le montre la figure 7.

Un apprentissage automatique (« machine learning ») permet de constituer puis d'adapter le modèle de flexibilité d'un site aux évolutions de comportement des occupants, changements de caractéristiques des équipements flexibles, évolution de paramètres externes tels que la météo, etc. Les méthodes d'apprentissage automatique utilisables sont celles de type « Xgboost » ("boosting", c'est-à-dire agrégation d'arbres), « Recurrent Neural Network» (réseau de neurones récurent), ou encore via la moyenne des flexibilités précédemment réalisées.

## Revendications

1. Procédé d'agrégation de flexibilités de consommation ou de production d'énergie électrique d'une pluralité de sites constituant ensemble un portefeuille clients, lequel est mis en œuvre par des moyens informatiques et qui comporte les étapes suivantes :
a) envoi d'une demande de flexibilités de consommation ou de production par un gestionnaire d'un réseau électrique (GESR) à un agrégateur (AGR) ;
b) agrégation (B2) par ledit agrégateur (AGR) des flexibilités individuelles (B7) des sites disponibles dans ledit portefeuille clients, ces flexibilités individuelles étant constituées d'autant de modèles individuels de flexibilité que de sites disponibles ;
c) activation (B3) desdites flexibilités disponibles,
**caractérisé par le fait qu'**il comporte en outre les étapes suivantes :
d) mesure (B4) des courbes réelles de puissance, c'est à dire de charge, respectivement de production desdits sites pendant l'activation de l'étape c) ;
e) calcul (B5) *a posteriori,* c'est à dire après la fin de l'activation de l'étape c), de la flexibilité réelle réalisée pour chacun desdits sites ;
f) à chaque réitération desdites étapes b) à e), adaptation (B6) desdits modèles individuels de flexibilité par apprentissage automatique.

2. Procédé selon la revendication 1, **caractérisé par le fait que** ledit calcul (B5) de l'étape e) est réalisé à partir de la comparaison entre la puissance de la période d'activation avec la puissance relevée pendant au moins une période sans activation.

3. Procédé selon revendication 2, **caractérisé par le fait que** l'adaptation (B6) des modèles par apprentissage automatique se fait par construction d'un modèle statistique à partir de l'enregistrement des profils de flexibilités réalisées successivement.

4. Procédé selon l'une des revendications 1 à 3, **caractérisé par le fait que** ledit apprentissage automatique est mis en œuvre via au moins un algorithme déterminant la moyenne des flexibilités précédemment réalisées, un algorithme d'agrégation d'arbres, ou un réseau de neurones récurent.

5. Programme d'ordinateur comportant des instructions adaptées pour l'exécution des étapes du procédé selon l'une des revendications 1 à 4, lorsque ledit programme d'ordinateur est exécuté par au moins un processeur.

6. Support d'enregistrement lisible sur un ordinateur sur lequel est enregistré un programme d'ordinateur comportant des instructions pour l'exécution des étapes du procédé selon l'une des revendications 1 à 4.

7. Système informatique (I) d'agrégation de flexibilités de consommation ou de production d'énergie électrique d'une pluralité de sites constituant ensemble un portefeuille clients, pour la mise en œuvre du procédé selon l'une des revendications 1 à 4,
**caractérisé par le fait qu'**il comporte un serveur informatique (1) composé d'au moins un processeur, au moins une mémoire, ainsi qu'un ensemble d'interfaces, ces interfaces étant configurées pour communiquer avec :
- un serveur informatique (2) rattaché audit gestionnaire de réseau électrique (GESR) avec lequel elles échangent des demandes, respectivement de offres de flexibilité ;
- avec lesdits sites avec lesquels elles transmettent des ordres de flexibilités ;
- et/ou avec des compteurs (3) ou autres dispositifs de mesure de la puissance desdits sites, qui leur transmettent soit en continu les valeurs de puissance des sites, soit périodiquement les courbes de puissance enregistrées par ces compteurs et autres dispositifs de mesure.

8. Système (I) selon la revendication 7, **caractérisé par le fait qu'**il comporte une mémoire contient une base de données des consommations relevées sur les sites, ainsi que leurs modèles constitués par apprentissage automatique.

9. Système (I) selon la revendication 7 ou 8, **caractérisé par le fait qu'**il comporte également au moins un dispositif gestionnaire d'énergie ou un automatisme configurés pour assurer une gestion locale, c'est à dire au niveau d'un site, de la consommation ou de la production dudit site, et prendre en compte des ordres de modulations de puissance transmis à distance par ledit serveur informatique (1).

10. Système (I) selon l'une des revendications 7 à 9, **caractérisé par le fait qu'**il comporte également au moins une passerelle domestique configurée pour acheminer des signaux de pilotage vers lesdits sites et collecter des mesures de puissance par ledit serveur informatique (1), au moins lorsqu'un moyen de communication distant ne le permet pas.

11. Système (I) selon l'une des revendications 7 à 10, qui comporte des moyens informatiques pour la mise en œuvre des étapes du procédé selon l'une des revendications 1 à 4.

## Patentansprüche

1. Verfahren zur Aggregation von Verbrauchs- oder Produktionsflexibilitäten elektrischer Energie einer Vielzahl von Standorten, die zusammen ein Kundenportfolio bilden, das durch Informatikmittel durchgeführt wird und das die folgenden Schritte umfasst:
a) Senden einer Verbrauchs- oder Produktionsflexibilitätenanforderung durch einen Betreiber eines Stromnetzes (GESR) an einen Aggregator (AGR);
b) durch den Aggregator (AGR), Aggregation (B2) der einzelnen Flexibilitäten (B7) der in dem Kundenportfolio verfügbaren Standorte, wobei diese einzelnen Flexibilitäten aus ebenso vielen einzelnen Flexibilitätsmodellen wie verfügbaren Standorten bestehen;
c) Aktivierung (B3) der verfügbaren Flexibilitäten,
**dadurch gekennzeichnet, dass** es ferner die folgenden Schritte umfasst:
d) Messen (B4) der realen Leistungs-, das heißt Last- beziehungsweise Produktionskurven, der Standorte während der Aktivierung des Schritts c);
e) im Nachhinein, das heißt nach dem Ende der Aktivierung des Schritts c), Berechnung (B5) der realen, für jeden der Standorte ausgeführten Flexibilität;
f) bei jeder erneuten Iteration der Schritte b) bis e), Anpassung (B6) der einzelnen Flexibilitätsmodelle durch maschinelles Lernen.

2. Verfahren nach Anspruch 1, **dadurch gekennzeichnet, dass** die Berechnung (B5) des Schritts e) ausgehend von dem Vergleich zwischen der Leistung der Aktivierungsperiode und der während mindestens einer Periode ohne Aktivierung erhobenen Leistung durchgeführt wird.

3. Verfahren nach Anspruch 2, **dadurch gekennzeichnet, dass** die Anpassung (B6) der Modelle durch maschinelles Lernen durch Konstruktion eines statistischen Modells ausgehend von der Aufzeichnung der Profile von aufeinanderfolgend ausgeführten Flexibilitäten erfolgt.

4. Verfahren nach einem der Ansprüche 1 bis 3, **dadurch gekennzeichnet, dass** das maschinelle Lernen über mindestens einen Algorithmus, der das Mittel der vorhergehend ausgeführten Flexibilitäten bestimmt, einen Baumaggregationsalgorithmus oder ein rekurrentes neuronales Netz durchgeführt wird.

5. Computerprogramm, das Anweisungen umfasst, die zur Ausführung der Schritte des Verfahrens nach einem der Ansprüche 1 bis 4 geeignet sind, wenn das Computerprogramm durch mindestens einen Prozessor ausgeführt wird.

6. Maschinenlesbarer Datenträger, auf dem ein Computerprogramm aufgezeichnet ist, das Anweisungen für die Ausführung der Schritte des Verfahrens nach einem der Ansprüche 1 bis 4 umfasst.

7. IT-System (I) zur Aggregation von Verbrauchs- oder Produktionsflexibilitäten elektrischer Energie einer Vielzahl von Standorten, die zusammen ein Kundenportfolio bilden, zur Durchführung des Verfahrens nach einem der Ansprüche 1 bis 4,
**dadurch gekennzeichnet, dass** es einen IT-Server (1) umfasst, der aus mindestens einem Prozessor, mindestens einem Speicher sowie einer Menge von Schnittstellen besteht, wobei diese Schnittstellen dazu ausgestaltet sind, zu kommunizieren mit:
- einem IT-Server (2), der mit dem Stromnetzbetreiber (GESR) verbunden ist, mit dem sie Flexibilitätsanforderungen bzw. -angebote austauschen;
- mit den Standorten, mit denen sie Flexibilitätsaufträge übermitteln;
- und/oder mit Zählern (3) oder anderen Vorrichtungen zur Messung der Leistung der Standorte, die ihnen entweder fortlaufend die Standortleistungswerte oder periodisch die von diesen Zählern und anderen Messvorrichtungen aufgezeichneten Kurven übermitteln.

8. System (I) nach Anspruch 7, **dadurch gekennzeichnet, dass** es einen Speicher umfasst, der eine Datenbank der an den Standorten erhobenen Verbrauchsdaten sowie ihre durch maschinelles Lernen gebildeten Modelle enthält.

9. System (I) nach Anspruch 7 oder 8, **dadurch gekennzeichnet, dass** es auch mindestens eine Energieverwaltungsvorrichtung oder einen Automatismus umfasst, die dazu ausgestaltet sind, eine lokale, das heißt auf der Ebene eines Standorts, Verwaltung des Verbrauchs oder der Produktion des Standorts zu gewährleisten und von dem IT-Server (1) fernübermittelte Leistungsmodulationsaufträge zu berücksichtigen.

10. System (I) nach einem der Ansprüche 7 bis 9, **dadurch gekennzeichnet, dass** es auch mindestens ein Heim-Gateway umfasst, das dazu ausgestaltet ist, Steuersignale hin zu den Standorten zu transportieren und Leistungsmessungen durch den IT-Server (1) zumindest zu sammeln, wenn ein Fernkommunikationsmittel dies nicht ermöglicht.

11. System (I) nach einem der Ansprüche 7 bis 10, das Informatikmittel für die Durchführung der Schritte des Verfahrens nach einem der Ansprüche 1 bis 4 umfasst.

## Claims

1. A method for aggregating flexibilities of electrical energy consumption or production of a plurality of sites constituting together a client portfolio, which is implemented by computer means and which includes the following steps:
a) sending a request for consumption or production flexibilities from a manager of an electrical network (GESR) to an aggregator (AGR);
b) aggregating (B2) by said aggregator (AGR) the individual flexibilities (B7) of the sites available in said client portfolio, these individual flexibilities being made up of as many individual flexibility models as there are sites available;
c) activating (B3) said available flexibilities,
**characterized by** the fact that it further includes the following steps:
d) measuring (B4) the actual power curves, i.e. load respectively production curves of said sites during the activation of step c);
e) calculating (B5) *a posteriori,* i.e. after the end of the activation of step c), the actual flexibility achieved for each of said sites;
f) on each reiteration of said steps b) to e), adapting (B6) said individual flexibility models by machine learning.

2. The method according to claim 1, **characterized by** the fact that said calculation (B5) of step e) is carried out from the comparison between the power of the activation period with the power recorded for at least one period without activation.

3. The method according to claim 2, **characterized by** the fact that the adaptation (B6) of the models by machine learning is made by construction of a statistical model from the recording of the profiles of flexibilities achieved successively.

4. The method according to any of claims 1 to 3, **characterized by** the fact that said machine learning is implemented via at least one algorithm determining the average of the previously achieved flexibilities, a tree aggregation algorithm or a recurrent neural network.

5. A computer program including instructions adapted for the execution of the steps of the method according to any of claims 1 to 4, when said computer program is executed by at least one processor.

6. A computer readable recording medium on which a computer program is recorded including instructions for the execution of the steps of the method according to any of claims 1 to 4.

7. A computer system (I) for aggregating flexibilities of electrical energy consumption or production of a plurality of sites constituting together a client portfolio, for the implementation of the method according to any of claims 1 to 4,
**characterized by** the fact that it includes a computer server (1) composed of at least one processor, at least one memory, as well as a set of interfaces, these interfaces being configured to communicate with:
- a computer server (2) attached to said electrical network manager (GESR) with which they exchange requests, respectively offers of flexibility;
- with said sites with which they transmit orders of flexibilities;
- and/or with meters (3) or other devices for measuring the power of said sites, which transmit thereto either continuously the power values of the sites, or periodically the power curves recorded by these meters and other measuring devices.

8. The system (I) according to claim 7, **characterized by** the fact that it includes a memory containing a database of the consumptions recorded on the sites, as well as their models made up by machine learning.

9. The system (I) according to claim 7 or 8, **characterized by** the fact that it also includes at least one energy manager device or an automation configured to ensure a local management, that is to say at the level of a site, of the consumption or production of said site, and take into account the power modulation orders transmitted remotely by said computer server (1).

10. The system (I) according to any of claims 7 to 9, **characterized by** the fact that it also includes at least one home gateway configured to convey control signals towards said sites and collect power measurements by said computer server (1), at least when a remote communication means does not allow it.

11. The system (I) according to any of claims 7 to 10, which includes computer means for the implementation of the steps of the method according to any of claims 1 to 4.
